# EUROPEAN PATENT SPECIFICATION

(11) **EP 2 511 159 B1**
(45) Date of publication and mention of the grant of the patent: **24.09.2014**
(21) Application number: 11162250.2
(22) Date of filing: 13.04.2011
(51) Int. Cl.: B62D 21/15

(54) **A beam structure for a vehicle comprising a beam stress arrangement**
Trägerstruktur für ein Fahrzeug mit Trägerbelastungsanordnung
Structure d'essieu pour véhicule comportant un agencement de stress d'essieu

(43) Date of publication of application: 17.10.2012
(73) Proprietor: Volvo Car Corporation, 40 531 Göteborg (SE)
(72) Inventor: Janevik, Peter, 41304, Göteborg (SE); Hörling, Petter, 42350, Torslanda (SE)
(74) Representative: Kraenzmer, Martin

(56) References cited:
- DE-A1- 4 230 669
- DE-B3- 10 320 815
- US-A1- 2005 121 997

## Description

### TECHNICAL FIELD

The present invention relates to a beam structure for a vehicle and a method for providing a controlled deformation of a beam structure in a vehicle during a collision. The beam structure comprises a beam stress arrangement adapted to provide the beam structure with a stress to enable a controlled deformation during a collision.

### BACKGROUND OF THE INVENTION

Beam structures are used for a number of different applications in vehicles, for example, as the front side members in a passenger vehicle chassis, and are thus components whose design crucially affects the crash safety of the vehicle. In attempting to achieve high crash safety, it has normally been striven for, by a controlled crash sequence, to force as far as possible the elements in the structure to be deformed in the most energy absorbing manner and with an optimum intrusion distance.

Beam structures for vehicles generally exhibit two different deformations upon a collision. The first is generally referred to as crumple deformation and the second as buckle deformation. When a beam structure experiences crumple deformation, the beam structure will convert a high amount of imparted energy during a collision, thus converting the kinetic energy of the colliding object to e.g. heat. This is sometimes referred to as that the energy is absorbed. The purpose is of course to prevent intrusion of the colliding object into the vehicle, or to permit intrusion over a small distance only.

Buckle deformation of a beam will generally convert a relatively small amount of energy and permit the colliding object to intrude a longer distance into the vehicle. However, regardless of the type of deformation, it remains important to minimize the negative crash effects on the passengers. The distance by which a vehicle is permitted to deform before non-deformable parts intrude into the passengers cabin i.e. the deformation distance, should be kept as long as possible. Therefore even at a low speed, the impact of a collision may be severe for the passengers if the retardation of the vehicle is very fast and the deformation distance is very short. In the same way, a collision at a high speed may be relatively harmless if the retardation is relatively slow and the deformation distance is relatively long. It is easy to see that these different collision situations require totally different properties of the beam structure in a vehicle. There have been attempts at providing a solution to this problem by providing active beam structures.

Normally, the beam structure in a vehicle is regarded as a passive safety system where it is primarily the geometric shape of the box-shaped beams which, by virtue of their energy-absorbing capacity, determine the collision safety. It is, however, known to arrange an 'active" beam structure in a vehicle, i.e. a system where a collision triggers an activity which makes the beam system perform in a manner exceeding its normal mechanical limits. Such an active beam arrangement is known, e.g. by US 4 050 537. Here, an explosive charge is used to change, in a collision, the cross section of a box beam in such a manner that its rigidity, and thus its energy-absorbing capacity, is changed.

In the patent publication of WO 98/22327 a beam structure is described wherein each beam is coordinated with an individual retardation sensor, each disposed to send an individual retardation-dependent signal to a control unit. The control unit compares the signals and activates the means to change the rigidity of the beams depending on the difference between the signals from the retardation sensors. The principle behind the described invention is an idea of dimensioning the beams for a certain collision situation requiring certain rigidity. The rigidity of the beams is changed for collision situations in which a change of rigidity is desirable.

### SUMMARY

Another example of an active beam structure for a vehicle is disclosed in the US patent publication No. US 2005/0121997 A1, Honda Motor Co. The beam structure comprises a number of piezoelectric element actuators to impart a load along the chassis frame. The load is designated to control the deformation of the chassis frame during a collision.

There are drawbacks with some of the solutions of the prior art in terms of that they use systems which permanently disrupt the beam structures. It is an object of the present invention to provide for a useful alternative, or to provide for an improved beam structure for a vehicle. More specifically, it is an object to provide a beam structure for a vehicle adapted for providing a controlled deformation during a collision. The beam structure comprises a beam stress arrangement adapted for providing a portion of the beam structure with a stress. The stress imparted to the beam structure by the beam stress arrangement is adapted to provide the beam structure with a designated buckle point to promote a buckle deformation at the buckle point upon the collision.

By introducing a stress to the beam structure, the beam structure can be promoted to a buckle deformation, instead of e.g. a crumple deformation, if a collision occurs. The beam structure is thus manipulated in a non permanent way. The solution provides for a beam structure with a beam stress arrangement that is reliable, and which does not provide the beam structure with permanent damages.

According to an aspect of the invention, the beam structure has a yield stress point. The stress imparted to the beam structure by the beam stress arrangement is kept below the yield stress point of the beam structure. This keeps the beam structure from going into plastic deformation, i.e. permanent deformation.

According to an aspect of the invention, the stress, imparted to the beam structure by the beam stress arrangement, is between 20-80 % of the yield stress of the beam structure. This will enable a sufficient force to be imparted to the beam structure, while assuring that no permanent deformation is imparted to the beam structure.

According to an aspect of the invention, the beam structure comprises a first and a second deformable beam, each comprising a beam stress arrangement. The first and the second deformable beam can be arranged in a vehicle such a car, truck, or the like.

According to an aspect of the invention, the beam stress arrangement is adapted to be activated in response to a signal from a collision sensor system. Optionally, or additionally, the beam stress arrangement can be activated from other electrical components or electronic control units, or a mechanical activation mechanism, to thereby provide the designated buckle point. This enables the beam stress arrangement to be activated and deactivated. If the sensors detect an imminent collision, they can activate the beam stress arrangement which imparts a stress to the beam structure. The imparted stress designates a buckle point on the beam structure if the vehicle collides, if a collision does not occur, the beam stress arrangement can be deactivated and the beam structure relaxes and returns to its original form, without permanent deformation. The beam stress arrangement is thus adapted to be deactivated in response to a signal from the collision sensor system, or any other electronic control unit, thereby deactivating the designated buckle point, simply by removing the designated buckle point, without leaving any permanent deformation on the beam structure.

According to an aspect of the invention, the beam stress arrangement comprises a wire mechanism, a pneumatic mechanism or a shaft mechanism, or combinations thereof, to impart the stress to the beam structure. Other possible mechanisms are wires using spacers, a preloaded spring, i.e. a spring mechanism, hydraulic or pneumatic pistons, gas pressure applied on the surface of the beam structure, heating applied on surface of the beam structure by means of combustion or electrical current, for example.

According to an aspect of the invention, the beam stress arrangement is adapted to provide the portion of the beam structure with a stress before, or during, the collision.

According to an aspect of the invention, a method for providing a controlled deformation of a beam structure in a vehicle is provided. The method comprises the steps of;
- detecting an ongoing, or imminent, collision;
- determining the character, or the expected character, of the detected collision and;
- imparting a stress to the beam structure, thus providing the beam structure with a designated buckle point, the imparted stress being below the yield stress point of the beam structure.

According to an aspect of the invention, the method comprises the step of removing the imparted stress to the beam structure. When removing the stress, the designated buckle point of the beam structure is removed. The beam structure can thus crumple instead of buckle, as the designated buckle point is removed. The removing the imparted stress to the beam structure is performed as a function to a detected collision, as a function of the character of a collision, or as a function of the absence of a detected collision.

According to an aspect of the invention, the beam structure comprises a beam stress arrangement. The beam stress arrangement is adapted to impart a beam structure with a stress so as to impose, or promote, a designated buckle point on the beam structure, should the beam structure be subjected to a collision.

### BRIEF DESCRIPTION OF THE DRAWINGS

Embodiments of the present invention is described in greater detail with reference to the accompanying figures in which;
figure 1 shows a vehicle comprising a beam structure comprising a beam stress arrangement;
figure 2 shows a schematic view of the beam structure of the vehicle in figure 1 as seen from above;
figures 3a-3b show a beam stress arrangement and parts of a beam structure;
figure 4 shows parts of the beam structure in figures 3a-3b after the beam stress arrangement has been activated and;
figure 5 shows a second embodiment of a beam stress arrangement arranged on parts of a beam structure suitable for a vehicle.

### DETAILED DESCRIPTION OF PREFERRED EMBODIMENTS

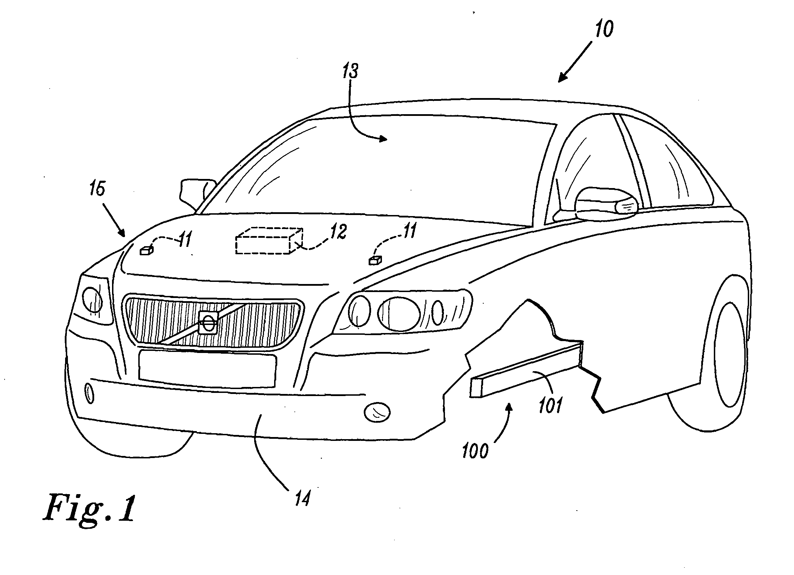

Figure 1 shows a vehicle 10, in the form of a car, comprising a beam structure 100 which during collision is intended to deform so as to partly or fully absorb the collision energy, i.e. convert the imparted energy to another form, e.g. heat or permanent plastic deformation. In the shown non limiting embodiment, the vehicle is arranged with at least one sensor 11, in this case two sensors 11, which forms part of a collision sensor system. The sensors 11 are communicating with an electronic control unit, ECU, in this case an onboard computer 12 of the vehicle 10. During collision, or just before collision, the sensors 11, or any other appropriate and useable sensor system in the vehicle 10, reports to the computer 12 of the ongoing or imminent collision. The computer 12 analyses the input and thereafter initiates appropriate counter measures depending on the result of the analysis. One such counter measure can be a modification of the rigidity of at least parts of the beam structure 100 so that the collision energy is absorbed in a controlled manner, e.g. at the right moment and with an appropriate level during the collision.

The vehicle 10 comprises a passenger compartment 13 which comprises seats for a driver and a plurality of additional passengers. As used herein the term "passenger" is meant to include the driver of the vehicle 10. A bumper 14 is arranged at the front 15 of the vehicle.

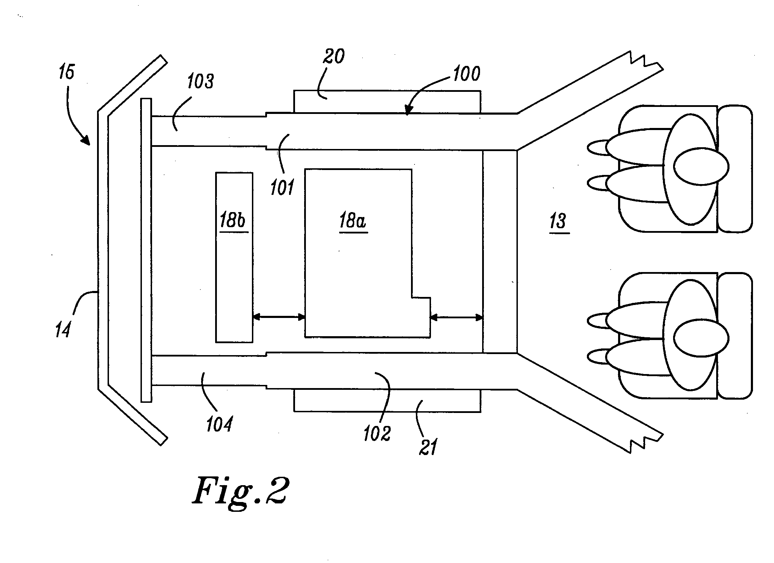

The beam structure 100 may comprise a first and a second deformation beam 101, 102, as shown in figure 2 from above. The first and the second deformation beams 101, 102 are arranged substantially parallel and longitudinal with the vehicle 10, extending substantially from the passenger compartment 13 to the proximity of the front 15 of the vehicle 10. In the shown embodiment, the first and the second deformable beams 101, 102 extend along the longitudinal sides of the vehicle, inwardly of the wheel house (not shown). An engine, formed by engine parts 18a and 18b, is arranged between the bumper 14 and the passenger compartment 13.

A first and a second crash box 103, 104 are arranged on the first and the second deformation beam 101, 102 between the first and the second deformation beam 101, 102 and the bumper 14. In low speed collisions, the first and the second crash box 103, 104 are adapted to brace a majority of the impact during a collision in the direction of a longitudinal axis A of the vehicle 10 by crumpling so that a minimum amount of damage to the vehicle 10, and injury to the passengers, is sustained. However, in case of a high speed collision, the first and second deformable beams 101, 102 are intended to brace a majority of the energy from the collision so that a minimum of injury is imparted to the passengers of the vehicle 10. The available deformation distance is indicated by the arrows between the engine parts 18a and 18b. The deformation distance is intended to visualize the distance which the vehicle can be deformed substantially without intrusion of objects into the passenger compartment 13.

Figure 2 also shows a first and a second beam stress arrangement 20, 21. It should be noted that at least one, of the first and the second deformable beams 101, 102 can be arranged with beam stress arrangement 20, 21 as described herein. The beam stress arrangement could also be positioned at other places on the beam structure 100 or on other beam structures of the vehicle 10. In figure 2, the first and the second beam stress arrangement 20, 21 are arranged substantially adjacent the first and the second deformable beams 101, 102 respectively.

The beam structure 100, and the first deformable beam 101, has a yield stress point, or a buckle yield stress point The yield stress point is that stress which the beam structure 100, or the first deformable beam 101, can be subjected to before the material begins to deform plastically. The applied stress by the beam stress arrangement 20 is kept below that point, i.e. below the yield stress point. As is understood, the yield stress point at which a beam structure will start to be plastically deformed can be determined by using a stress-strain curve for the specific beam structure used, in this case the first deformable beam 101. In cases where the yield stress point is difficult to determine, an offset yield stress point can be set to 0,2 % of the strain. The beam stress arrangement 20 is adapted to impart a stress to a beam structure 100, in the shown embodiment to the first deformable beam 101. The beam stress arrangement 20 will however not impart a permanent deformation to the beam structure 100.

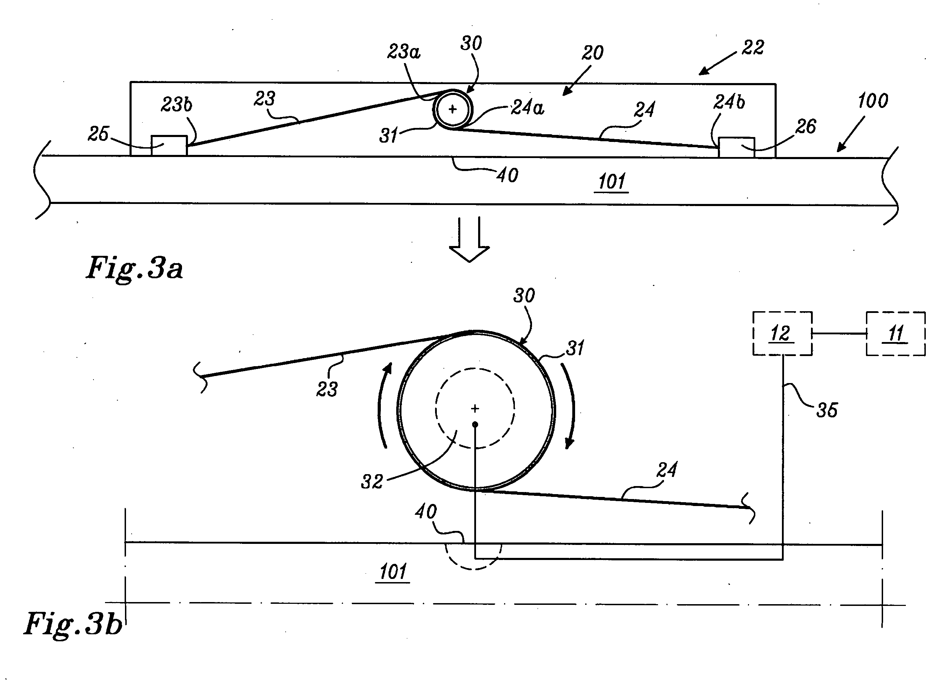

Figure 3a shows an embodiment of the first beam stress arrangement 20 in greater detail and arranged on the first deformable beam 101 of the beam structure 100. The beam stress arrangement 20 is covered by a housing 22 of thermoplastic material, in this case polypropylene which is adapted to cover the beam stress arrangement 20 from dirt, dust, particles etc, while at the same time not affect the rigidity of the beam structure 100.

The beam stress arrangement 20 comprises a first and a second flexible elongated member, in this case a first and a second wire 23, 24, each having a first and a second end 23a, 23b, 24a, 24b. The first ends 23a, 24a of the first and the second wires 23, 24 are connected to a retraction arrangement 30, in this case a spindle 31 operated by an electrical motor 32. The electrical motor 32 of the spindle 31 can be fixedly secured to another part of the vehicle so as to enable the retraction of the first and the second wire 23, 24. Figure 3b shows the retraction arrangement 30 in greater detail. The electrical motor 32 is in the shown embodiment arranged inside of the spindle 31 as indicated by the dotted line in figure 3b. The electrical motor 32 is communicating with the collision sensor system 11, 12, or at least the computer 12, or any other electrical control unit capable of such communication. In the shown embodiment, the communication is effectuated using electrical wires 35, although wire less communication using WLan, blue tooth, or the like is possible.

The second ends 23b, 24b of the first and the second wire 23, 24 are attached at a first and a second attachment point 25, 26 respectively to the first deformable beam 101 using screws, welding, or any other appropriate attachment means. As an option, the spindle 31 can be arranged directly at one attachment point and be adapted to operate only one wire which is attached at a second attachment point.

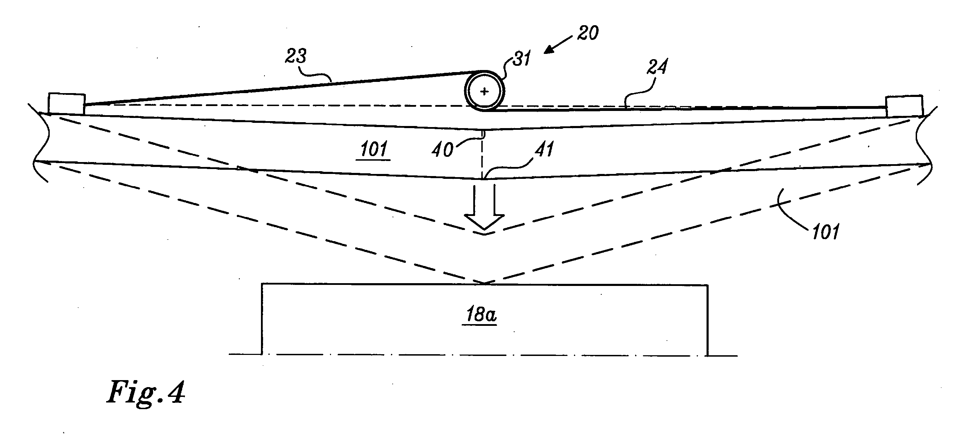

The beam stress arrangement 20 is adapted to impart the first deformable beam 101, and thus the beam structure 100, with a designated buckle point 40, i.e. a point at which the first deformable beam 101 is designated to buckle upon a collision or similar to provide for a controlled deformation of the first deformable beam 101. As the first deformable beam 101 buckles, the buckle point 40 moves inwardly towards the engine parts 18a, 18b (shown in figure 2), as indicated by the arrow in figure 3a and in figure 4. In the shown embodiment in figures 3a-3b, this is achieved by retracting the first and the second wires onto the spindle 31 by rotating the spindle 31 in the direction of the arrows as shown in figure 3b. As the spindle 31 rotates, the first deformable beam 101 is imparted with a designated buckle point 40. The designated buckle point 40 will enable the first deformable beam 101 to buckle at the designated buckle point 40, however, the spindle 31 can be reversed and the first deformable beam 101 can return to a relaxed state, without permanently deform the beam structure 100, or the first deformable beam 101.

Figure 4 schematically shows the first deformable beam 101 in a tensioned state, i.e. the beam stress arrangement 20 in activated. As can be seen, the first deformable beam 101 is slightly curved, having an apex in the vicinity of the designated buckle point 40. The curvature of the first deformable beam 101 is however exaggerated in figure 4. The beam stress arrangement 20 is, by the imparted stress to the first deformable beam 101, promoting the first deformable beam 101 to buckle in the direction indicated by the arrow in figure 4 when the vehicle 10 is subjected to a collision.

The dotted lines of the first deformable beam 101 in figure 4 illustrates the first deformable beam 101 after buckling at the designated buckle point 40, i.e. after the vehicle 10 has collided. The buckling shown in figure 4 is also referred to as a longitudinal buckling.

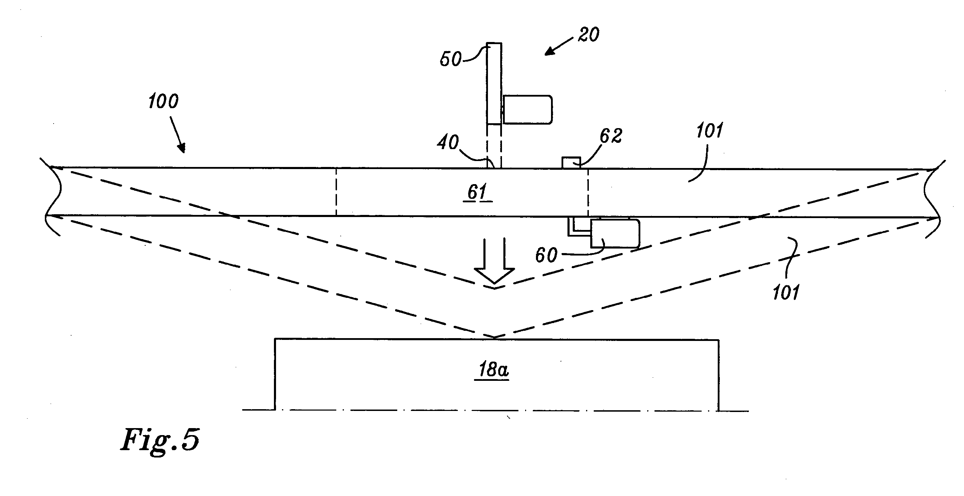

Figure 5 shows another embodiment of a beam stress arrangement 20 which is arranged to impart a stress to the beam structure 100, and in the shown embodiment, to the first deformable beam 101, as an option, or supplement, to the beam stress arrangement shown in figures 3a-4.

The beam stress arrangement 20 shown in figure 5 comprises a movable shaft 50 which can be displaced between a first position, in which the shaft is inactivated, i.e. not interacting with the beam structure 100, or the first deformable beam 101, and a second position, in which the shaft 50 is imparting a stress to the first deformable beam 101. The imparted stress provides the first deformable beam 101, and thus the beam structure 100, with a designated buckle point 40 at which the first deformable beam 101 may buckle during a collision. The second position of the shaft 50, when the shaft 50 is activated, is shown with dotted lines in figure 5. The imparted stress is however not that high so as do elastically deform the first deformable beam 101, only high enough to promote a buckle at that point, thus providing the beam structure 100 with a designated buckle point 40.

Further shown in figure 5 is a pneumatic mechanism to provide for a designated buckle point as an option, or as a supplement. A compressor 60 is arranged to provide for an overpressure, i.e. a pressure above that of the atmosphere, inside a confined pocket 61 of the first deformable beam 101. A valve 62 is arranged to the confined pocket 61 to provide for a pressure relief to remove, or reduce, the overpressure from the confined pocket 61 of the first deformable beam 101. The valve 62 can also be used to regulate the amount of overpressure inside of the confined pocket 61 to an appropriate level. The compressor 60 can thus be operated at a constant level, while the valve 62 is used to operate the level of overpressure inside of the confined pocket 61.

By providing an overpressure in the confined pocket 61 of the first deformable beam 101, the first deformable beam 101 is weakened at that point. The imparted stress by the beam stress arrangement 20 can thus be lower than what would otherwise be necessary. The imparted stress is however always kept below the yield stress point of the first deformable beam 101, thus keeping the first deformable beam 101 within the elastic region, and not promoting the first deformable beam to pass the yield stress point and impart plastic deformation. The first deformable beam 101 after buckling is illustrated with dotted lines in figure 5.

Both the compressor 60 and the displaceable shaft 50, i.e. a shaft mechanism, as described above may be operated using a pretensioner (explosively expanding gas which drives a piston), a spring load, or an electrical motor. The electrical motors are communicating with the collision sensor system 11, 12, or at least the computer 12, or any other electrical control unit capable of such communication. The communication may be effectuated using electrical wires, although wire less communication using WLan, blue tooth, or the like is possible.

It should be noted that the beam stress arrangement 20 may be used together with a second beam stress arrangement, such as the compressor 60. A beam stress arrangement may also be used on beam structures having indents, weak spots, folds, or any other physical form to promote a buckle at a specific point. In such case, a beam stress arrangement may be used to further promote a buckle point at an additional spot, or position, on the beam structure, while not imparting a stress above the yield stress point of the specific beam structure in question.

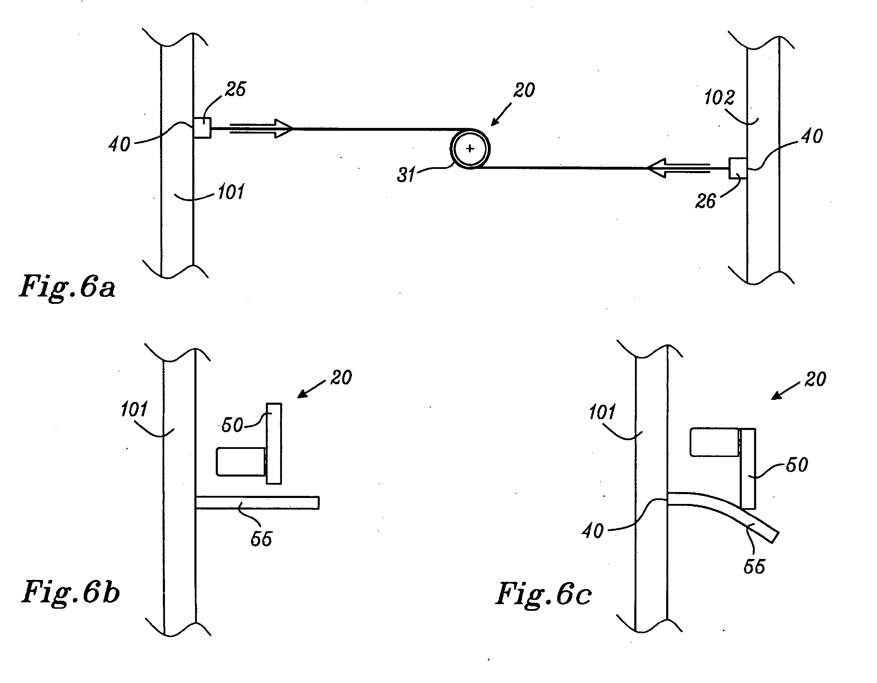

Other embodiments of the beam stress arrangement 20 and a beam structure comprising the beam stress arrangement 20 are shown in figures 6a-6c. Figures 6a shows parts of a beam structure 100 having a first and a second deformable beam 101, 102. In figure 6a, the beam stress arrangement 20 is identical to the beam stress arrangement 20 shown in figure 3a. The first and the second attachment point 25, 26 is arranged to the first and the second deformable beam 101, 102, respectively. As the spindle 31 is activated, the first and the second deformable beams 101, 102 are pulled towards each other, as indicated by the arrows, thus providing each deformable beam 101, 102 with a designated buckle point 40. In the simplest version of this embodiment, a single wire extends between the first and the second deformable beam 101, 102. The single wire could be manipulated, e.g. during a collision by a moving engine part, to provide for the designated buckle points.

Another embodiment is shown in figures 6b-6c, the beam stress arrangement 20, as the embodiment shown in figure 5, comprises a movable shaft 50 which can be displaced between a first position, in which the shaft is inactivated, i.e. not interacting with the beam structure 100, or the first deformable beam 101, and a second position, in which the shaft 50 is imparting a stress to the first deformable beam 101. The imparted stress provides the first deformable beam 101 with a designated buckle point 40 at which the first deformable beam 101 may buckle during a collision. However, instead of imparting a stress directly on the first deformable beam 101, the movable shaft 50 is in working cooperation with a lever 55, fixedly secured to the first deformable beam 101.

The second position of the shaft 50, when the shaft 50 is activated, is shown in figure 6c. As noticed, the lever 55 is slightly bent due to the imparted stress of the shaft 50. The imparted stress, via lever 55, is however not that high so as do elastically deform the first deformable beam 101, only high enough to promote a buckle at that point upon a collision, thus providing the beam structure 100 with a designated buckle point 40. Using a lever 55 provides for an embodiment which uses less amount of stress than compared to an embodiment using no lever. The shaft 50 can thereafter be inactivated at appropriate time to remove the stress imparted to the first deformable beam 101 and thus return the position shown in figure 6b. The shaft 50 can be operated using a pretensioner (explosively expanding gas which drives a piston), a spring load, an electrical motor, or the like.

The present invention enables a beam stress arrangement which can be activated or deactivated and provides for a beam structure which can be promoted to a buckle mode without subjecting the beam structure to a permanent deformation.

## Claims

1. A beam structure (100) for a vehicle (10), said beam structure is adapted for providing a controlled deformation during a collision, said beam structure (100), comprising a beam stress arrangement (20, 50, 60) adapted for providing a portion of said beam structure (100) with a stress,
**characterized in that**
said stress imparted to said beam structure (100) by said beam stress arrangement (20, 23, 24, 30 50, 60) is adapted to provide said beam structure (100) with a designated buckle point (40) to promote a buckle deformation at said buckle point (40) upon said collision.

2. The beam structure according to claim 1, wherein said beam structure (100) has a yield stress point, and in that said stress imparted to said beam structure (100) by said beam stress arrangement (20, 50, 60) is kept below said yield stress point of said beam structure (100).

3. The beam structure according to claim 2, wherein said stress imparted to said beam structure (100) by said beam stress arrangement (20, 50, 60) is between 20-80 % of said yield stress of said beam structure (100).

4. The beam structure according to any of the preceding claims, wherein said beam structure (100) comprises a first and a second deformable beam (101, 102), each comprising a beam stress arrangement (20, 50, 60).

5. The beam structure according to any of the preceding claims, wherein said beam stress arrangement (20, 50, 60) is adapted to be activated in response to a signal from a collision sensor system (11, 12), or any other electronic control unit, or a mechanical activation mechanism, thereby providing said designated buckle point (40).

6. The beam structure according to claim 5, wherein said beam stress arrangement (20, 50, 60) is adapted to be deactivated in response to a signal from said collision sensor system (11, 12), or any other electronic control unit, or a mechanical activation mechanism, thereby deactivating said designated buckle point (40).

7. The beam structure according to any of the preceding claims, wherein said beam stress arrangement (20) comprises a wire mechanism (30, 31), a pneumatic mechanism (60), a shaft mechanism (50), or combinations thereof, to impart said stress to said beam structure (100).

8. The beam structure according to claim 7, wherein said wire mechanism (30, 31), pneumatic mechanism (60), or shaft mechanism (50), is adapted to impart said stress to said beam structure (100) via a lever 55, said lever 55 being fixedly secured to said beam structure (100).

9. A vehicle comprising a beam structure according to any of the preceding claims.

10. A method for providing a controlled deformation of a beam structure (100) in a vehicle (10) according to any of the preceding claims wherein, said method comprising the steps of;
- detecting an ongoing, or imminent, collision;
- determining the character, or the expected character, of the detected collision and;
- imparting a stress to said beam structure (100), thus providing said beam structure (100) with a designated buckle point (40), said imparted stress being below the yield stress point of said beam structure.

11. The method according to claim 10, wherein said method further comprises the step of;
- removing said imparted stress to said beam structure (100), thus removing said designated buckle point (40) of said beam structure (100), wherein the removing of said imparted stress to said beam structure (100) is performed as a function to a detected collision, as a function of the character of a collision, or as a function of a none detected collision.

## Patentansprüche

1. Holmaufbau (100) für ein Fahrzeug (10), wobei der Holmaufbau ausgelegt ist, eine gesteuerte Verformung während eines Zusammenstoßes bereitzustellen, wobei der Holmaufbau (100), der eine Holmbeanspruchungsanordnung (20, 50, 60) umfasst, die ausgelegt ist, eine Beanspruchung bei einen Abschnitt des Holmaufbaus (100) bereitzustellen,
**dadurch gekennzeichnet ist, dass**
die Beanspruchung, die auf den Holmaufbau (100) durch die Holmbeanspruchungsanordnung (20, 23, 24, 30, 50, 60) ausgeübt wird, ausgelegt ist, bei dem Holmaufbau (100) einen vorgesehenen Knickpunkt (40) zu schaffen, um bei dem Zusammenstoß eine Knickverformung an dem Knickpunkt (40) zu fördern.

2. Holmaufbau nach Anspruch 1, wobei der Holmaufbau (100) einen Streckgrenzenpunkt aufweist und wobei die Beanspruchung, die auf den Holmaufbau (100) durch die Holmbeanspruchungsanordnung (20, 50, 60) ausgeübt wird, unter dem Streckgrenzenpunkt des Holmaufbaus (100) gehalten wird.

3. Holmaufbau nach Anspruch 2, wobei die Beanspruchung, die auf den Holmaufbau (100) durch die Holmbeanspruchungsanordnung (20, 50, 60) ausgeübt wird, 20-80% der Streckgrenze des Holmaufbaus (100) beträgt.

4. Holmaufbau nach einem der vorhergehenden Ansprüche, wobei der Holmaufbau (100) einen ersten und einen zweiten verformbaren Holm (101, 102) umfasst, die jeweils eine Holmbeanspruchungsanordnung (20, 50, 60) umfassen.

5. Holmaufbau nach einem der vorhergehenden Ansprüche, wobei die Holmbeanspruchungsanordnung (20, 50, 60) ausgelegt ist, in Reaktion auf ein Signal von einem Zusammenstoß-Sensorsystem (11, 12) oder von irgendeiner anderen elektronischen Steuerungseinheit oder von einem mechanischen Aktivierungsmechanismus aktiviert zu werden, wodurch der vorgesehene Knickpunkt (40) geschaffen wird.

6. Holmaufbau nach Anspruch 5, wobei die Holmbeanspruchungsanordnung (20, 50, 60) ausgelegt ist, in Reaktion auf ein Signal von dem Zusammenstoß-Sensorsystem (11, 12) oder von irgendeiner anderen elektronischen Steuerungseinheit oder von einem mechanischen Aktivierungsmechanismus deaktiviert zu werden, wodurch der vorgesehene Knickpunkt (40) deaktiviert wird.

7. Holmaufbau nach einem der vorhergehenden Ansprüche, wobei die Holmbeanspruchungsanordnung (20) einen Drahtmechanismus (30, 31), einen Druckluftmechanismus (60), einen Wellenmechanismus (50) oder eine Kombination daraus umfasst, um auf den Holmaufbau (100) eine Beanspruchung auszuüben.

8. Holmaufbau nach Anspruch 7, wobei der Drahtmechanismus (30, 31), der Druckluftmechanismus (60) oder der Wellenmechanismus (50) ausgelegt ist, über einen Hebel 55 auf den Holmaufbau (100) eine Beanspruchung auszuüben, wobei der Hebel 55 an dem Holmaufbau (100) fest angebracht ist.

9. Fahrzeug, das einen Holmaufbau nach einem der vorhergehenden Ansprüche umfasst.

10. Verfahren zum Bereitstellen einer gesteuerten Verformung eines Holmaufbaus (100) in einem Fahrzeug (10) nach einem der vorhergehenden Ansprüche, wobei das Verfahren die folgenden Schritte umfasst:
- Erfassen eines gerade stattfindenden oder bevorstehenden Zusammenstoßes;
- Bestimmen der Art oder der erwarteten Art des erfassten Zusammenstoßes; und
- Ausüben einer Beanspruchung auf den Holmaufbau (100), wobei bei dem Holmaufbau (100) ein vorgesehener Knickpunkt (40) geschaffen wird, wobei die ausgeübte Beanspruchung unter dem Streckgrenzenpunkt des Holmaufbaus liegt.

11. Verfahren nach Anspruch 10, wobei das Verfahren ferner den folgenden Schritt umfasst:
- Zurücknehmen der ausgeübten Beanspruchung von dem Holmaufbau (100), wodurch der vorgesehene Knickpunkt (40) des Holmaufbaus (100) zurückgenommen wird, wobei die Zurücknahme der auferlegten Beanspruchung von dem Holmaufbau (100) in Abhängigkeit von einem erfassten Zusammenstoß, in Abhängigkeit von der Art eines Zusammenstoßes oder in Abhängigkeit von einem nicht erfassten Zusammenstoß erfolgt.

## Revendications

1. Structure de poutre (100) pour un véhicule (10), ladite structure de poutre étant prévue pour fournir une déformation contrôlée au cours d'une collision, ladite structure de poutre (100) comprenant un agencement de contrainte de poutre (20, 50, 60) prévu pour conférer une contrainte à une portion de ladite structure de poutre (100),
**caractérisée en ce que**
ladite contrainte conférée à ladite structure de poutre (100) par ledit agencement de contrainte de poutre (20, 23, 24, 30, 50, 60) est prévue pour fournir à ladite structure de poutre (100) un point de flambage spécifié (40) pour favoriser une déformation de flambage au niveau dudit point de flambage (40) lors de ladite collision.

2. Structure de poutre selon la revendication 1, dans laquelle ladite structure de poutre (100) présente un point de contrainte de déformation plastique et en ce que ladite contrainte conférée à ladite structure de poutre (100) par ledit agencement de contrainte de poutre (20, 50, 60) est maintenue en dessous dudit point de contrainte de déformation plastique de ladite structure de poutre (100).

3. Structure de poutre selon la revendication 2, dans laquelle ladite contrainte conférée à ladite structure de poutre (100) par ledit agencement de contrainte de poutre (20, 50, 60) est comprise entre 20 et 80 % de ladite contrainte de déformation plastique de ladite structure de poutre (100).

4. Structure de poutre selon l'une quelconque des revendications précédentes, dans laquelle ladite structure de poutre (100) comprend une première et une deuxième poutre déformable (101, 102), chacune comprenant un agencement de contrainte de poutre (20, 50, 60).

5. Structure de poutre selon l'une quelconque des revendications précédentes, dans laquelle ledit agencement de contrainte de poutre (20, 50, 60) est prévu pour être activé en réponse à un signal provenant d'un système de capteur de collision (11, 12), ou de n'importe quelle autre unité de commande électronique, ou d'un mécanisme d'activation mécanique, pour ainsi fournir ledit point de flambage spécifique (40).

6. Structure de poutre selon la revendication 5, dans laquelle ledit agencement de contrainte de poutre (20, 50, 60) est prévu pour être désactivé en réponse à un signal provenant dudit système de capteur de collision (11, 12), ou de n'importe quelle autre unité de commande électronique, ou d'un mécanisme d'activation mécanique, pour ainsi désactiver ledit point de flambage spécifique (40).

7. Structure de poutre selon l'une quelconque des revendications précédentes, dans laquelle ledit agencement de contrainte de poutre (20) comprend un mécanisme à câble métallique (30, 31), un mécanisme pneumatique (40), un mécanisme à tige (50), ou des combinaisons de ceux-ci, pour conférer ladite contrainte à ladite structure de poutre (100).

8. Structure de poutre selon la revendication 7, dans laquelle ledit mécanisme à câble métallique (30, 31), ledit mécanisme pneumatique (60) ou ledit mécanisme à tige (50) est prévu pour conférer ladite contrainte à ladite structure de poutre (100) par le biais d'un levier (55), ledit levier (55) étant attaché de manière fixe à ladite structure de poutre (100).

9. Véhicule comprenant une structure de poutre selon l'une quelconque des revendications précédentes.

10. Procédé pour fournir une déformation contrôlée d'une structure de poutre (100) dans un véhicule (10) selon l'une quelconque des revendications précédentes, ledit procédé comprenant les étapes suivantes :
- détecter une collision en cours, ou imminente ;
- déterminer le caractère, ou le caractère attendu, de la collision détectée et ;
- conférer une contrainte à ladite structure de poutre (100), pour ainsi fournir à ladite structure de poutre (100) un point de flambage spécifique (40), ladite contrainte conférée étant en dessous du point de contrainte de déformation plastique de ladite structure de poutre.

11. Procédé selon la revendication 10, dans lequel ledit procédé comprend en outre l'étape suivants :
- supprimer ladite contrainte conférée à ladite structure de poutre (100), en supprimant ainsi ledit point de flambage spécifique (40) de ladite structure de poutre (100), la suppression de ladite contrainte conférée à ladite structure de poutre (100) étant réalisée en fonction d'une collision détectée, en fonction du caractère d'une collision, ou en fonction de l'absence d'une collision détectée.
